# EUROPEAN PATENT APPLICATION

(11) **EP 1 542 184 A1**
(43) Date of publication of application: **15.06.2005**
(21) Application number: 03771456.5
(22) Date of filing: 31.07.2003
(51) Int. Cl.: G07G 1/06

(54) **ELECTRONIC RECEIPT INFORMATION PROCESSING SYSTEM AND ELECTRONIC DEVICE**

(30) Priority: 31.07.2002 JP 2002222798
(71) Applicant: MATSUSHITA ELECTRIC INDUSTRIAL CO., LTD., Kadoma-shi, Osaka 571-8501 (JP)
(72) Inventor: OKAWA, Hisashi, Matsudo-shi, Chiba 271-0077 (JP); IKEZAKI, Masao, Neyagawa-shi, Osaka 572-0019 (JP); TAKAYAMA, Miwa, Funabashi-shi, Chiba 273-0865 (JP); TAKASE, Hakase, Matsudo-shi, Chiba 271-0045 (JP)
(74) Representative: Pautex Schneider, Nicole
(86) International application number: PCT/JP2003/009748
(87) International publication number: WO 2004/012162

(57) **Abstract**

To provide a video image generation processing device which generates a multi-angle video image which includes a reference video image and a related video image which relates to the reference video image. The video image generation processing device includes a video image database 105 storing image pickup positional information therein as attribute information of each video image data, together with video image data, and when a user inputs a search key by display unit 101, the related video image condition generating unit 103 obtains a video image which corresponds with the search key, from the video image database 105, and determines a condition of a video image which relates to the video image on the basis of information of the obtained video image. A Video image searching/synthesizing unit 104 synthesizes a video image which corresponds with the search key inputted by the display unit 101 and a video image which corresponds with the condition of a video image generated by the related video image condition generating unit 103, and thereby, generates a multi-angle video image. By this unit, browse of a monitor video image with heightened anti-crime effect and user interface is realized.

## Description

### <Technical Field>

This invention relates to an electronic receipt information processing system which processes information of computerized receipt, and so on.

### <Background Technology>

In the past, a purchaser of a commercial product etc. received a receipt which is cut off from a cash register at the time of purchasing a commercial product etc., and organized it. In addition, a purchaser transcribed information of a purchase specification which is described in a receipt, to a household account book etc., and manages the information.

In addition, as a conventional technology which improves the suchlike conventional methods, there is a computerized receipt information transmission and reception system as follows (e.g., see, JP-A-2001-283333). This computerized receipt information transmission and reception system is a computerized receipt information transmission and reception system which has an information management device for shop side information management, and a portable terminal with which a purchaser, who purchases a commercial product at the shop, takes along, characterized in that the information management device has a generation unit which integrates by computerizing purchase data information, purchase commercial product identification information, purchase number information and purchase amount information which are obtained on the basis of the commercial product purchase conduct of the purchaser, to generate computerized receipt information which corresponds the commercial product purchase conduct, and a transmission unit which wirelessly transmits the generated computerized receipt information to the portable terminal, in response to a computerized receipt information transmission request which is transmitted from the portable terminal, and the portable terminal has a request transmission unit which wirelessly transmits the computerized receipt information transmission request to the information management device, and a storing unit which receives the computerized receipt information which is transmitted from the information management device and stores the received computerized receipt information on a storage medium.

However, in the computerized receipt information transmission and reception system in JP-A-2001-283333 publication, auxiliary information could not be obtained on the basis of a part or all of electronic receipt information. As the auxiliary information, there are information which shows a guarantee period of a commercial product and return product information which shows availability of returning a commercial product and manual information of a commercial product, and so on.

Therefore, in the conventional computerized receipt information transmission and reception system, availability of returning a commercial product differs with respect to each commercial product, but there are such many cases that a consumer can not easily get hold of availability of returning a product.

In addition, a purchaser of a commercial product etc. does not recall with regard to guarantee information such as a guarantee period, and the guarantee period has passed before one knows it, and in the conventional computerized receipt information transmission and reception system, it is not possible to aid appropriate processing.

### <Disclosure of the Invention>

In order to solve the above-described problems, the invention is an electronic receipt information processing system having a first information processing device and a second information processing device, in which the first information processing device has an electronic receipt information receiving section which receives electronic receipt information having one or more information which relates to purchase settlement of a commercial product or a service, an auxiliary information obtaining unit which obtains auxiliary information on the basis of partial or all information of the electronic receipt information, a consumer's electronic receipt information configuring unit which generates consumer's electronic receipt information from a part or all of the electronic receipt information and the auxiliary information, and a consumer's electronic receipt information transmission unit which transmits the consumer's electronic receipt information which is configured by the consumer's electronic receipt information configuring unit, and the second information processing device has a consumer's electronic receipt information receiving section which receives the consumer's electronic receipt information, and a second consumer's electronic receipt information transmitting section which transmits a part or all of the consumer's electronic receipt information which the consumer's electronic receipt information receiving section received, and by the suchlike electronic receipt information processing system, it becomes possible to effectively use the auxiliary information which is obtained on the basis of partial or all information of the electronic receipt information.

Concretely speaking, the auxiliary information has return product information which is information showing whether it is possible to return a commercial product or it is impossible to return it, and thereby, it is possible to easily get hold of availability of returning a product.

Furthermore, the auxiliary has guarantee information, and thereby, it is possible to easily get hold of a guarantee period and a guarantee condition etc., and by automatically outputting information which relates to a guarantee period or/and a guarantee content on the basis of guarantee information, a purchaser does not forget the guarantee period.

According to the invention, it is possible to effectively utilize electronic receipt information which is collected at a shop where a commercial product etc. are purchased. In addition, it becomes possible to effectively use auxiliary information which is obtained on the basis of partial or all information of the electronic receipt information.

### <Brief Description of the Drawings>

Fig.1 is a schematic diagram of an electronic receipt information processing system according to a first embodiment;
Fig.2 is a block diagram of the electronic receipt information processing system according to the first embodiment;
Fig.3 is a flow chart which explains an operation of a first information processing device according to the first embodiment;
Fig.4 is a flow chart which explains an operation of a second information processing device according to the first embodiment;
Fig.5 is a view which shows an example of a configuration of electronic receipt information according to the first embodiment;
Fig.6 is a view which shows an example of a configuration of consumer's electronic receipt information according to the first embodiment;
Fig.7 is a view which shows a table for management the consumer's electronic receipt information according to the first embodiment;
Fig.8 is a block diagram of an electronic receipt information processing system according to a second embodiment;
Fig.9 is a flow chart which explains an operation of a first information processing device according to the second embodiment;

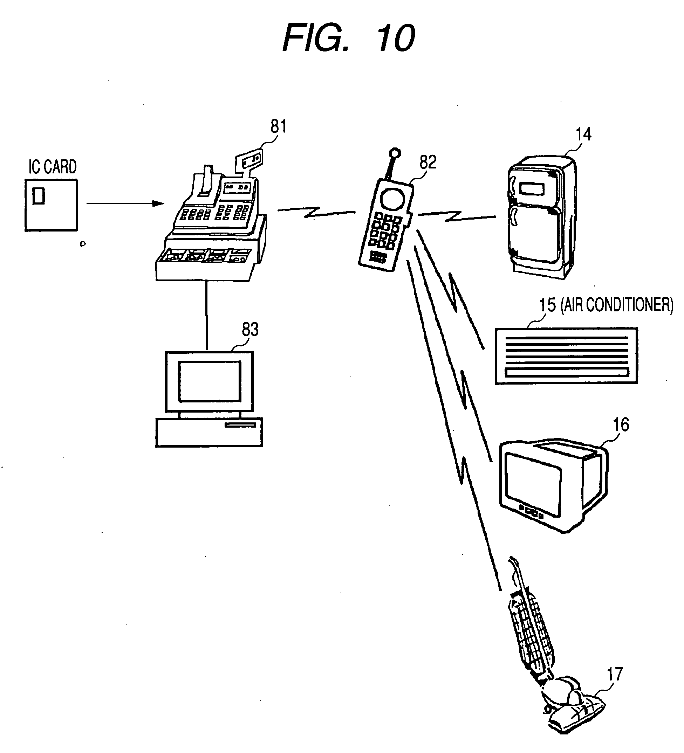

Fig.10 is a schematic diagram of the electronic receipt information processing system according to the second embodiment;
Fig.11 is a view which shows an example of a configuration of electronic receipt information according to the second embodiment; and
Fig.12 is a view which shows auxiliary information according to the second embodiment;
Fig.13 is a view which shows a table for managing consumer's electronic receipt information according to the second embodiment;
Fig.14 is a conceptual diagram of an electronic receipt information processing system according to a third embodiment;
Fig.15 is a block diagram of the electronic receipt information processing system according to the third embodiment; and
Fig.16 is a flow chart which explains an operation of a first information processing device according to the third embodiment.

Meanwhile, as for reference numerals and signs in the figures, 11, 81, 141 designate first information processing devices, and 12, 82 designate second information processing devices, and 13, 144 designate home servers, and 83 designates a third information processing device, and 142 designates a recording medium, and 143 designates a server device, and 1101 designates an electronic receipt information receiving section, and 1102 designates a terminal identifier receiving section, and 1103, 8103 designate first consumer's electronic receipt information transmitting sections, and 1201 designates a terminal identifier transmitting section, and 1202 designates a consumer's electronic receipt information receiving section, and 1203 designates a second consumer's electronic receipt information transmitting section, and 14102 designates a terminal identifier receiving section, and 14103 designates a first consumer's electronic receipt information transmitting section, and 14301 designates a consumer's electronic receipt information receiving section, and 14302 designates a third consumer's electronic receipt information storing section, and 14303 designates an information transmission request receiving section, and 14304 designates a third consumer's electronic receipt information transmitting section, and 14401 designates an information transmission request input receiving section, and 14402 designates an information transmission request transmitting section, and 14403 designates a second consumer's electronic receipt information receiving section, and 14404 designates a consumer's electronic receipt information outputting section, and 81031, 141032 designate auxiliary information obtaining sections, and 81032, 141033 designate consumer's electronic receipt information generating unit, and 81033, 141034 designate a consumer's electronic receipt information transmitting unit, and 141031 designates an auxiliary information storing unit.

### <Best Mode for Carrying Out the Invention>

Hereinafter, embodiments of an electronic receipt information processing system etc. will be described with reference to the drawings. Meanwhile, a constituent element to which an identical reference numeral is given in the embodiments carries out a similar operation, and therefore, there is such a case that a second explanation is omitted.

### (First Embodiment)

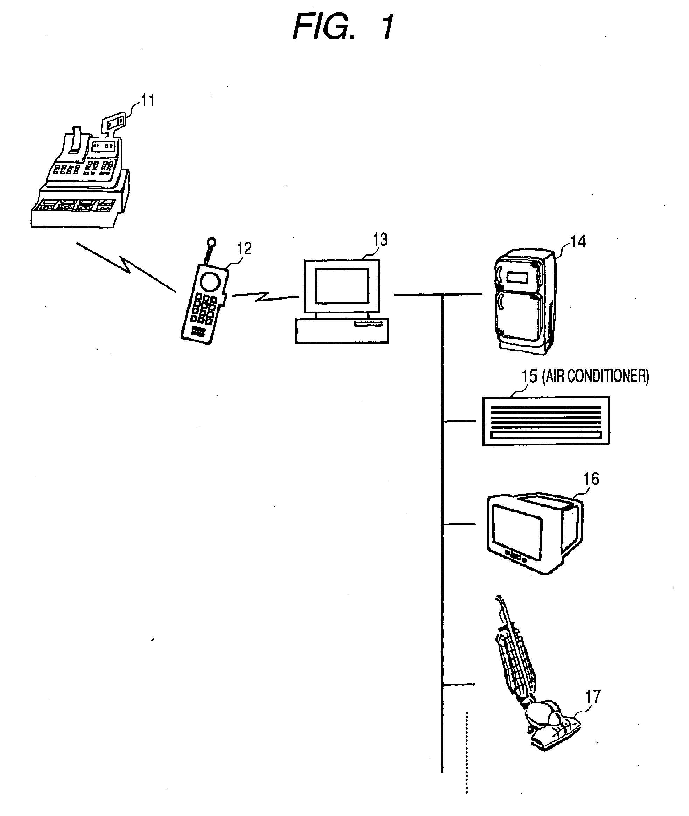

Fig.1 is a schematic diagram of an electronic receipt information processing system in the invention. The electronic receipt information processing system has a first information processing device 11, a second information processing device 12, a home server 13, a refrigerator 14, an air conditioner 15, a television 16, a cleaner 17 and so on. The first information processing device 11 is, for example, an information processing device which is installed at a shop where a commercial product and a service are purchased. Further concretely speaking, the first information processing device 11 is, for example, a cash register which has a communication function. The second information processing device 12 is, for example, a portable terminal. The home server 13 is, for example, installed indoors. In addition, the home server 13 can communicate with an indoor electronic equipment and an external device etc., and has a storing unit which stores information. The home server 13 is, for example, a personal computer, a digital television, a router which has a storing unit and so on.

The refrigerator 14, the air conditioner 15, the television 16, and the cleaner 17 etc. are electronic devices being able to communicate with the home server 13. Meanwhile, it is also all right even if the electronic receipt information processing system includes an electronic device other than the refrigerator 14, the air conditioner 15, the television 16, and the cleaner 17.

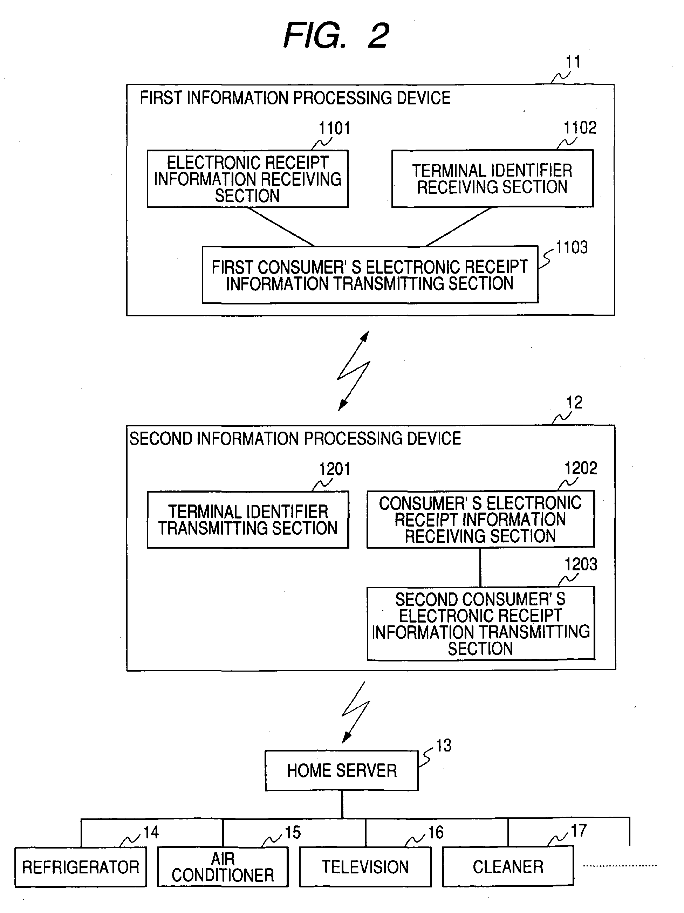

Fig.2 is a block diagram of the electronic receipt information processing system of the invention. The first information processing device 11 has an electronic receipt information receiving section 1101, a terminal identifier receiving section 1102, and a first consumer's electronic receipt information transmitting section 1103.

The electronic receipt information receiving section 1101 receives electronic receipt information having one or more information which relates to purchase settlement of commercial products and services. The electronic receipt information receiving section 1101 is, for example, a bar code reader. The electronic receipt information receiving section 1101 receives electronic receipt information by reading a bar code which is attached on a commercial product etc. which a consumer purchases. In this regard, however, the electronic receipt information receiving section 1101 may be a medium which obtains information from a RF tag. In such a case, the electronic receipt information receiving section 1101 obtains electronic receipt information from a RF tag which is attached on a commercial product etc. which a consumer purchases. Any realizing configuration of the electronic receipt information receiving section 1101 can be utilized. In addition, any data configuration of the electronic receipt information can be utilized.

The terminal identifier receiving section 1102 receives a terminal identifier, which is information for identifying the second information processing device 12, from the second information processing device 12. The terminal identifier receiving section 1102 can be normally realized by a wireless communication device, but it is also all right even if it is realized by a device which receives broadcasting and wired communication mechanism. In addition, the terminal identifier receiving section 1102 may be a device which reads a terminal identifier recorded on a recording medium, like an IC card reader. Meanwhile, for example, in case that the second information processing device 12 is a portable telephone, the terminal identifier is a telephone number of the portable telephone. In addition, for example, the terminal identifier is an identifier for identifying an owner of the second information processing device 12, a purchaser identifier for identifying an purchaser of a commercial product etc., and so on. In addition, for example, the terminal identifier may be an ID address of the second information processing device 12.

The first consumer's electronic receipt information transmitting section 1103 generates consumer's electronic receipt information which has a part or all of the electronic receipt information which is received by the electronic receipt information receiving section 1101, and transmits the consumer's electronic receipt information to the second information processing device 12.

The second information processing device 12 has a terminal identifier transmitting section 1201, a consumer's electronic receipt information receiving section 1202, and a second consumer's electronic receipt information transmitting section 1203.

The terminal identifier transmitting section 1201 transmits a terminal identifier, which is stored in the second information processing device 12, to the first information processing device 11. In this regard, however, in case that the terminal identifier is recorded on a recording medium such as an IC card, and the first information processing device 11 has an IC card reader etc., the terminal identifier transmitting section 1201 is unnecessary. The terminal identifier transmitting section 1201 is normally a wireless communication device, but may be a broadcasting device.

The consumer's electronic receipt information receiving section 1202 receives consumer's electronic receipt information from the first information processing device 11. The consumer's electronic receipt information receiving section 1202 is normally a wireless communication device, but may be a broadcasting device.

The second consumer's electronic receipt information transmitting section 1203 transmits a part or all of the consumer's electronic receipt information, which the consumer's electronic receipt information receiving section 1202, to an outside. The outside is, in this embodiment, the home server 13 which provides an interface with an outside. The second consumer's electronic receipt information transmitting section 1202 is normally a wireless communication device, but may be a broadcasting device. Meanwhile, there is also such a case that the terminal identifier transmitting section 1201, the consumer's electronic receipt information receiving section 1202, and the second consumer's electronic receipt information transmitting section 1203 are realized by a single mechanical configuration.

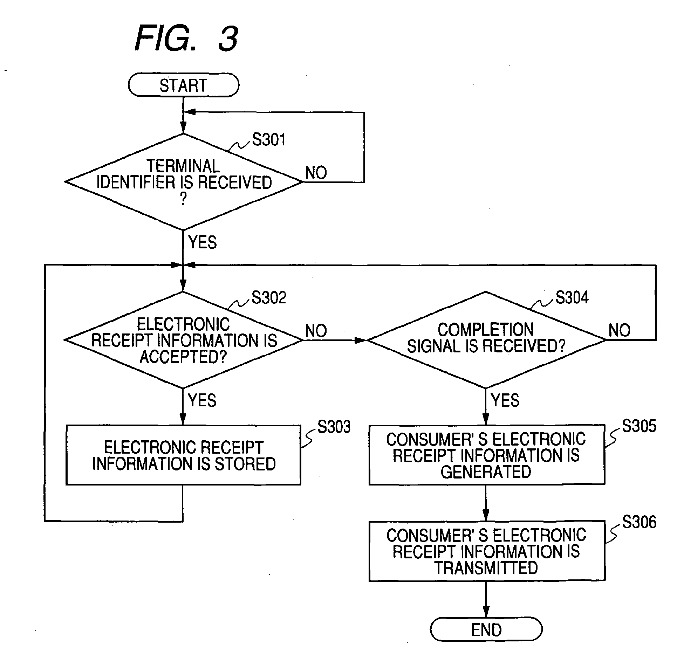

Next, an operation of the first information processing device 11, which generates the electronic receipt information processing system, will be described with reference to a flow chart of Fig.3.

(Step S301) The terminal identifier receiving section 1102 judges whether or not the terminal identifier received from the second information processing device 12. If it receives the terminal identifier, it goes to a step S302, and if it does not receive the terminal identifier, it goes back to the step S301.

(Step S302) The electronic receipt information receiving section 1101 judges whether or not it accepted the electronic receipt information. If it receives the electronic receipt information, it goes to a step S303, and if it does not accept the electronic receipt information, it goes to a step S304.

(Step S303) The electronic receipt information receiving section 1101 stores the electronic receipt information which is received in the step S302.

(Step S304) The electronic receipt information receiving section 1101 judges whether or not a completion signal is received. If the completion signal is received, it goes to a step S305, and if the completion signal is not received, it goes back to the step S302. The completion signal is a signal which means a completion of acceptance of electronic receipt information of a commercial product or a service which a certain purchaser purchased. There can be also such a case that acceptance of the completion is different in arrangement from acceptance of the electronic receipt information. For example, acceptance of the completion signal is to accept depression of a predetermined key of the first information processing device 11. In addition, acceptance of the completion signal includes to judge that there is no input of any information for a given length of time, so-called time-out. In addition, acceptance of the completion signal may be acceptance of a signal which shows such a fact that acceptance of electronic receipt information for a next person is started. Meaning of the completion signal, and meaning of acceptance of the completion signal are the same in other places in this specification.

(Step S305) The first consumer's electronic receipt information transmitting section 1103 generates first consumer's electronic receipt information which has a part or all of one or more electronic information stored in the step S303 and the terminal identifier received in the step S301.

(Step S306) The first consumer's electronic receipt information transmitting section 1103 transmits the consumer's electronic receipt information which is configured in the step S305.

Meanwhile, in a flow chart of Fig.3, any order of reception of the terminal identifier and acceptance of the electronic receipt information can be utilized.

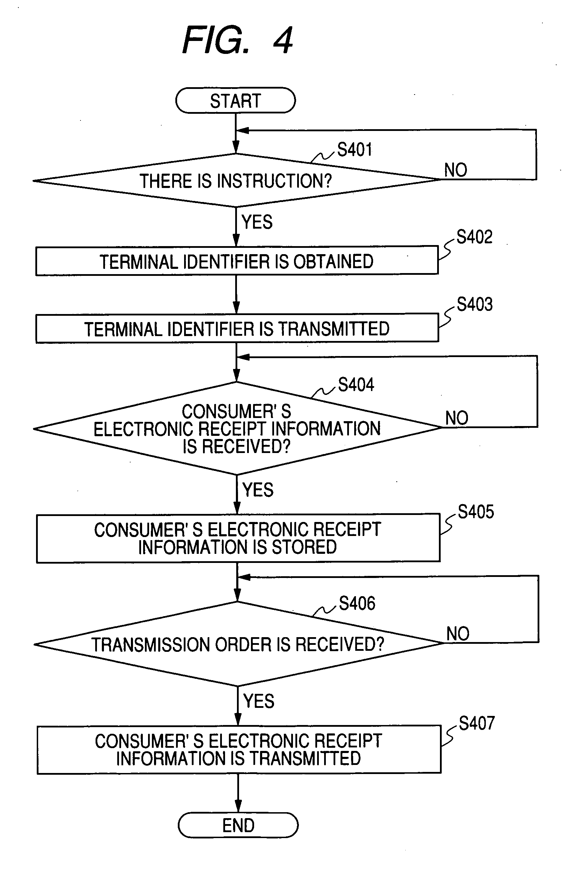

Next, an operation of the second information processing device 12, which configures the electronic receipt information processing system, will be described with reference to a flow chart of Fig.4.

(Step S401) The terminal identifier transmitting section 1201 judges whether or not an instruction for transmitting a terminal identifier is received. If a transmission instruction of the terminal identifier is received, it goes to a step S402, and if the transmission instruction of the terminal identifier is not received, it goes back to the step S401.

(Step S402) The terminal identifier transmitting section 1201 obtains the terminal identifier which has been stored.

(Step S403) The terminal identifier transmitting section 1201 transmits the terminal identifier which is obtained in the step S402, to the first information processing device 11.

(Step S404) The consumer's electronic receipt information receiving section 1202 judges whether or not consumer's electronic receipt information from the first information processing device 11 is received. If the consumer's electronic receipt information is received, it goes to a step S405, and if the consumer's electronic receipt information is not received, it goes back to the step S404.

(Step S405) The consumer's electronic receipt information receiving section 1202 stores the consumer's electronic receipt information which is received in the step S404.

(Step S406) The second consumer's electronic receipt information transmitting section 1203 judges whether or not a transmission order which is an instruction for transmitting consumer's electronic receipt information is received. If the transmission order is received, it goes to a step S407, and if the transmission order is not received, it goes back to the step S406.

(Step S407) The second consumer's electronic receipt information transmitting section 1203 transmits the consumer's electronic receipt information, which is stored in the step S405, to an outside. Here, the second consumer's electronic receipt information transmitting section 1203 transmits the consumer's electronic receipt information to the home server 13. Meanwhile, the home server 13, which received the consumer's electronic receipt information, utilizes the consumer's electronic receipt information by various processing. Its content will be described in the following concrete example. Meanwhile, processing of the step S405 and the step S406 is not normally carried out continuously, and there is temporal delay.

Hereinafter, a concrete operation of the electronic receipt information processing system will be described. Now, the first information processing device 11 is a cash register which is set in a shop from which a commercial product and a service are purchased, and the cash register has a communication function. In addition, the first information processing device 11 has also a bar code reader. In addition, a bar code, in which electronic receipt information is recorded, is attached on a commercial product. The second information processing device is a portable telephone, and is able to carry out transmission and reception of data with the first information processing device 11. A device for transmission and reception of data between the first information processing device 11 and the second information processing device 12 may be an another wireless communication device such as IEEE802.11, bluetooth and infrared communication.

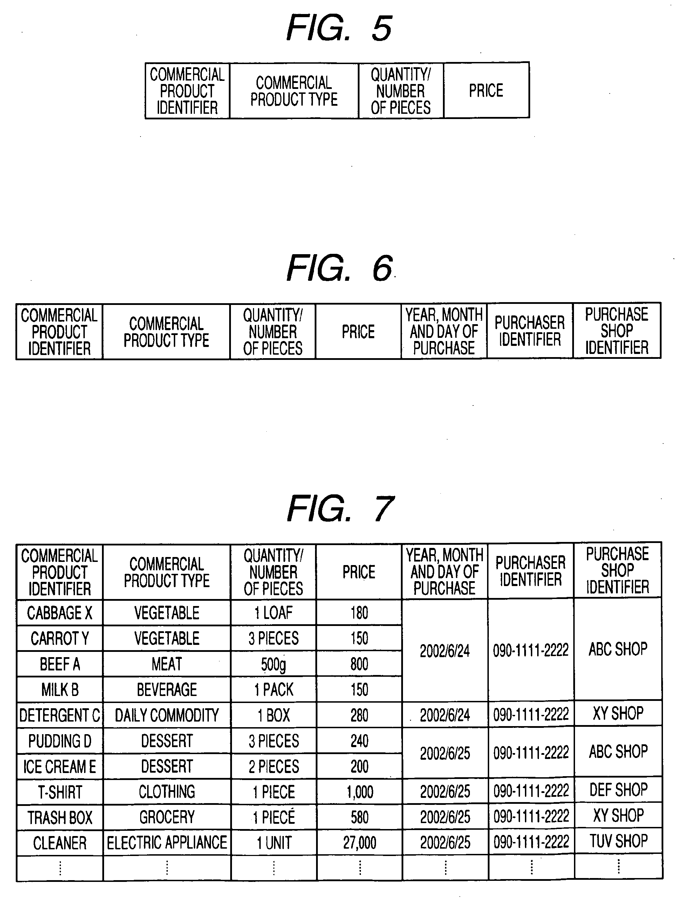

Fig.5 shows a configuration example of electronic receipt information. The electronic receipt information has, for example, commercial product identifier, commercial product type, quantity/number of pieces, and price. The commercial product identifier is information for specifying a commercial product, and may be a commercial product name, and may be an identifier which includes an alphanumeric character or sign, a special character etc. The commercial product type is information which shows a type of a commercial product. A unit of quantity/number of pieces is dependent on a commercial product. Fig.6 shows a configuration example of consumer's electronic receipt information. The consumer's electronic receipt information has year, month and day of purchase, a terminal identifier, and purchase shop identifier, in addition to the above-described configuration of the electronic receipt information. The year, month and day of purchase shows such time that a commercial product is purchased, and may includes time. The terminal identifier may be any information for identifying a terminal (may be a purchaser who is an owner of the terminal), and here, it is, for example, a telephone number of the second information processing device 12. The purchase shop identifier may be any information for identifying a shop where a commercial product etc. were purchased.

In the above-described situation, a user goes out for purchase of a commercial product, taking with the second information processing device 12 (portable telephone). A telephone number of the second information processing device 12 is, for example, "090-1111-2222". In addition, a purchase shop is a super market called as "ABC shop". In addition, date of today is "2002/6/24". Then, a user intends to purchase four items of "cabbage" "carrot" "beef (pack)" and "milk", and brings commercial products to a cash register, and makes settlement. On that occasion, a user depresses a specific button of the second information processing device 12, to transmit the terminal identifier "090-1111-2222" to the first information processing device 11 (cash register). The cash register receives the terminal identifier "090-1111-2222". Then, a checkout operator of the super market reads a bar code of the commercial product by a card code reader. Then, at such a stage that reading of bar codes of the four items is completed, a checkout operator depresses a specific button, to instruct a completion of bar code reading. Next, the first information processing device 11 generates consumer's electronic receipt information which has a configuration of Fig.6. Meanwhile, the first information processing device 11 generates the consumer's electronic receipt information, from the electronic receipt information which is read by the bar code reader, the received terminal identifier, and year, month and day of purchase which has been stored in advance, and the purchase shop identifier. Then, the first information processing device 11 transmits consumer's electronic receipt information as to the purchased four items, to the second information processing device 12. The second information processing device 12 receives and stores consumer's electronic receipt information as to the purchased four items.

Next, a user purchases "a detergent" at "XY shop" on "2002/6/24". Also, a user purchases "a pudding" and "an ice cream" at "ABC shop" on "2002/6/25". Even in such a case, by the above-described processing, the consumer's electronic receipt information is stored in the second information processing device 12. The stored consumer's electronic receipt information is shown in Fig.7.

Then, a user transmits the stored consumer's electronic receipt information to the home server 13, by a fixed operation such as depression etc. of a specific button. As a utilization mode of the consumer's electronic receipt information in the home server 13, for example, the following utilization modes are conceivable. Firstly, the home server 13 applies count processing to the consumer's electronic receipt information to automatically prepare a household account book. Secondly, the consumer's electronic receipt information is transmitted from the home server 13 to the television 16, and the consumer's electronic receipt information is displayed on the television 16.

As above, according to this embodiment, it is possible to effectively utilize electronic receipt information which is collected at a shop where a commercial product etc. are purchased, for example, in an in-home electronic equipment through a portable terminal. In case of carrying out settlement by the portable terminal, convenience is especially high.

Meanwhile, in this embodiment, the configuration examples of the electronic receipt information and the consumer's electronic receipt information are shown, but it is needless to say that a data configuration of the electronic receipt information etc. is not limited to the illustrated data configuration.

In addition, in this embodiment, a terminal identifier is transmitted from the second information processing device 12 to the first information processing device 11, but such processing is not indispensable. It may be such a thing that the first information processing device in this embodiment has the electronic receipt information receiving section which receives electronic receipt information having one or more information which relates to purchase settlement of a commercial product or a service, and the first consumer's electronic receipt information transmitting section which generates and transmits consumer's electronic receipt information which has a part or all of electronic receipt information, and the second information processing device is equipped with the consumer's electronic receipt information receiving section which receives consumer's electronic receipt information, and the second consumer's electronic receipt information transmitting section which transmits a part or all of the consumer's electronic receipt information which the consumer's electronic receipt information receiving section received.

Furthermore, it is also all right even if various processing in this embodiment is realized by software, and provided by software download. In addition, it is also all right even if such software is recorded on a recording medium such as CD-ROM and distributed. It is also the same in another embodiment that there is various things as such realization device.

### (Second Embodiment)

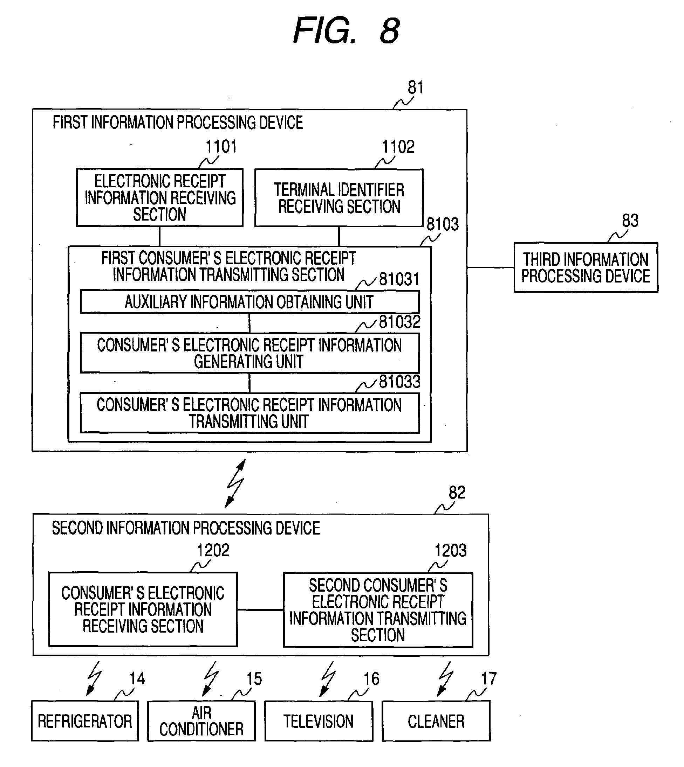

Fig. 8 is a block diagram of an electronic receipt information processing system of the invention. The electronic receipt information processing system has a first information processing device 81, a second information processing device 82, a third information processing device 83, a refrigerator 14, an air conditioner 15, a television 16, a cleaner 17 and so on. The first information processing device 81 has an electronic receipt information receiving section 1101, a terminal identifier receiving section 1102, and a first consumer's electronic receipt information transmitting section 8103. The first consumer's electronic receipt information transmitting section 8103 has an auxiliary information obtaining unit 81031, a consumer's electronic receipt information generating unit 81032, and a consumer's electronic receipt information transmitting unit 81033. The second information processing device 82 has a consumer's electronic receipt information receiving section 1202, and a second consumer's electronic receipt information transmitting section 1203. The third information processing section 83 stores auxiliary information.

The auxiliary information obtaining unit 81031 obtains auxiliary information on the basis of partial or all information of electronic receipt information. As the auxiliary information, there are information which shows a guarantee period of a commercial product and return product information which shows availability of returning a commercial product and manual information of a commercial product, and so on. The auxiliary information obtaining unit 81031 may access to an external device to obtain the auxiliary information, and also the auxiliary information obtaining unit 81031 may obtain the auxiliary information from information which is stored in the first information processing device 81. The auxiliary information obtaining unit 81031 is normally realized by software, but may be realized by hardware (electronic circuit). Meanwhile, here, the auxiliary information obtaining unit 81031 obtains auxiliary information from the third information processing device 83. In addition, in case that the auxiliary information obtaining unit 81031 accesses to an external device to obtain auxiliary information, the auxiliary information obtaining unit 81031 further includes a communication unit.

The consumer's electronic receipt information generating unit 81032 generates consumer's electronic receipt information from the auxiliary information and a part or all of the electronic receipt information. The consumer's electronic receipt information generating unit 81032 is normally realized by software, but may be realized by hardware (electronic circuit).

The consumer's electronic receipt information transmitting unit 81033 transmits the consumer's electronic receipt information which is generated by the consumer's electronic receipt information generating unit. A destination to which the consumer's electronic receipt information is transmitted is an electronic equipment such as the refrigerator 14, the air conditioner 15, the television 16, the cleaner 17 and so on. As the consumer's electronic receipt information transmitting unit 81033, a wireless communication unit is preferable, but a wired communication unit or a broadcasting unit may be utilized.

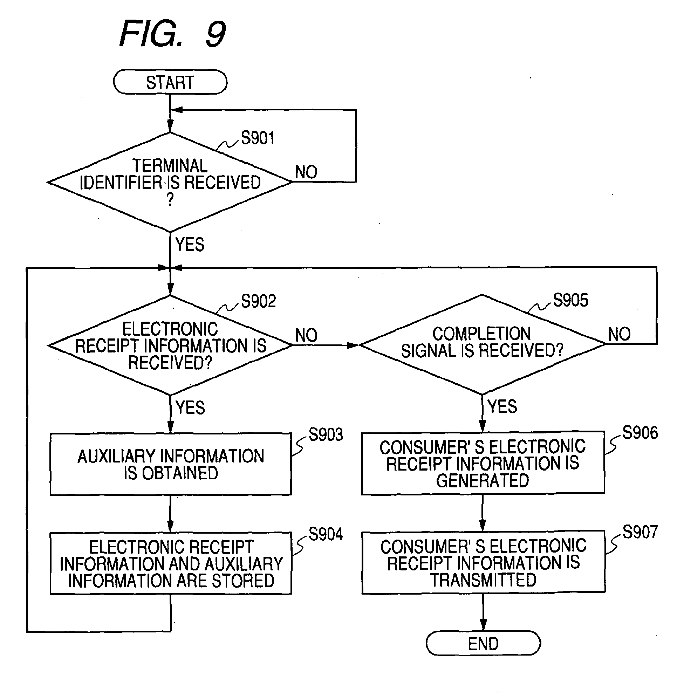

Next, an operation of the first information processing device 81, which generates the electronic receipt information processing system, will be described with reference to a flow chart of Fig. 9.

(Step S901) The terminal identifier receiving section 1102 judges whether or not a terminal identifier is received. If the terminal identifier is received, it goes to a step S902, and if the terminal identifier is not received, it goes back to the step S901. Receiving of the terminal identifier is, for example, carried out as follows. The terminal identifier is recorded in an IC card. Then, the terminal identifier receiving section 1102 is configured by an IC card reader, and receives the terminal identifier by inserting the IC card into the IC card reader.

(Step S902) The electronic receipt information receiving section 1101 judges whether or not electronic receipt information is received. If the electronic receipt information is received, it goes to a step S903, and if the electronic receipt information is not received, it goes to a step S905.

(Step S903) the auxiliary information obtaining unit 81031 obtains auxiliary information from the third information processing device, on the basis of partial or all information of the electronic receipt information which is received in the step S902.

(Step S904) The electronic receipt information receiving section 1101 stores the electronic receipt information which is received in the step S902, and the auxiliary information obtaining unit 81031 stores the auxiliary information which is obtained in the step S903.

(Step S905) The electronic receipt information receiving section 1101 judges whether or not a completion signal is received. If the completion signal is received, it goes to a step S906, and if the completion signal is not received, it goes back to the step S902.

(Step S906) The first consumer's electronic receipt information transmitting section 8103 generates consumer's electronic receipt information, on the basis of a part or all of the electronic receipt information which is received the electronic receipt information receiving section 1101, the auxiliary information which is obtained by the auxiliary information obtaining unit 81031, and the terminal identifier which is received in the step S901.

(Step S906) The first consumer's electronic receipt information transmitting section 8103 transmits the consumer's electronic receipt information which is generated in the step S906, to the second information processing device 82.

Meanwhile, in a flow chart of Fig.9, any order of reception of the terminal identifier and acceptance of the electronic receipt information can be utilized.

Next, an operation of the second information processing device 82, which generates the electronic receipt information processing system, will be described. The second information processing device 82 transmits a part or all of consumer's electronic receipt information to an electronic equipment such as the refrigerator 4, the air conditioner 15, the television 16, and the cleaner 17. In addition, the second information processing device 82 applies statistical processing to the consumer's electronic receipt information which has been stored, to automatically prepare a household account book. Meanwhile, a concrete operation of the second information processing device will be hereinafter described in detail.

Hereinafter, a concrete operation of the electronic receipt information processing system will be described. The first information processing device 81 is a so-called cash register, which is disposed at a shop which sells commercial products etc., and has a communication function. In addition, the first information processing device 81 has an IC card reader. The second information processing device 82 is a portable terminal with a communication function. The third information processing device 83 is an information processing device (server) which has stored auxiliary information in pairs with a commercial product identifier. As to the IC card, a user, who purchases commercial products etc., holds it, and a terminal identifier is recorded.

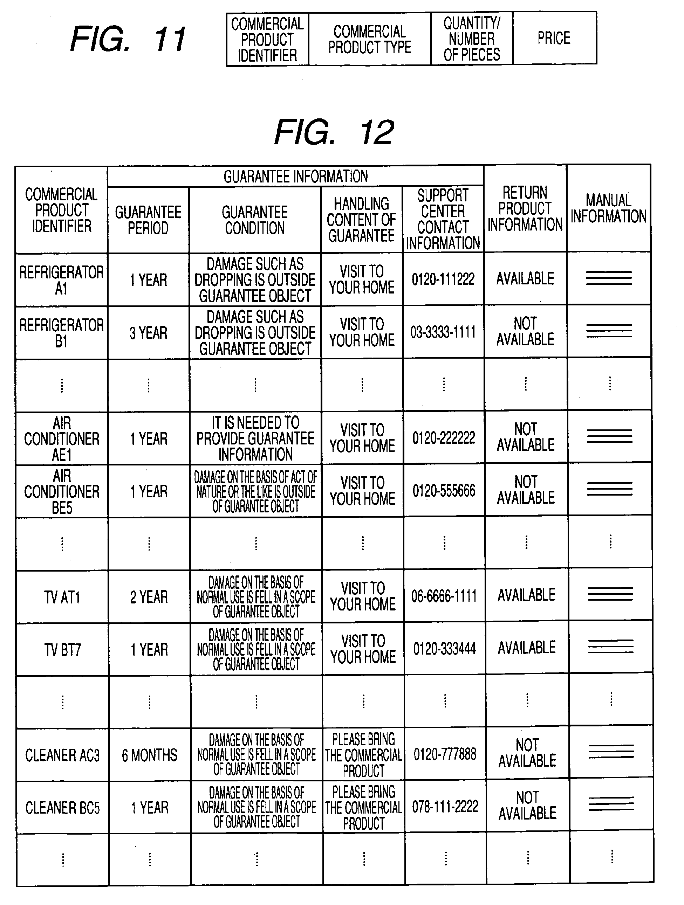

Fig.11 shows a configuration example of electronic receipt information. The electronic receipt information has, for example, commercial product identifier, manufacturer identifier, commercial product type, price. The manufacturer identifier is information which shows a manufacturer of a commercial product. Fig.12 shows an example of auxiliary information which is stored in the third information processing device 83. The auxiliary information has "commercial product identifier" "guarantee period" "return product information" and "manual information". The "guarantee information" is information which relates to guarantee of a commercial product, and here, has "guarantee period" "guarantee condition" "handling content of guarantee" and "support center contact information". The "guarantee condition" is information which shows conditions in case of giving guarantee, and in Fig.12, it is text data, but may be coded. The "handling content of guarantee" is data which shows a content of handling at the time of guarantee, and in Fig.12, it is text data, but may be coded. The "support center contact information" is a telephone number etc. of a support center. The "return product information" is information which shows availability of returning a commercial product. The "manual information" is information of a manual of a commercial product, and has normally text data, image information (still image, moving image), audio information and so on. In this regard, however, any data type of the "manual information" can be utilized.

Now, a user holds an IC card in which a terminal identifier is recorded, and the portable terminal 82, and purchases "refrigerator A1" and "television BT7" (these are so-called model numbers). Then, a user carries out settlement processing at a cash register (first information processing device 81). On that occasion, a checkout operator reads the IC card by the first information processing device 81. Then, the checkout operator reads bar codes which were printed on price tags of the "refrigerator A1" and "television BT7" by a bar code reader (which the first information processing device 81 has). The first information processing device 81 reads electronic receipt information "refrigerator A1" "manufacturer A" "refrigerator" "150,000 Yen" of the "refrigerator A1". In addition, the first information processing device 81 reads electronic receipt information "television BT7" "manufacturer B" "television" "200,000 Yen" of the "television BT7".

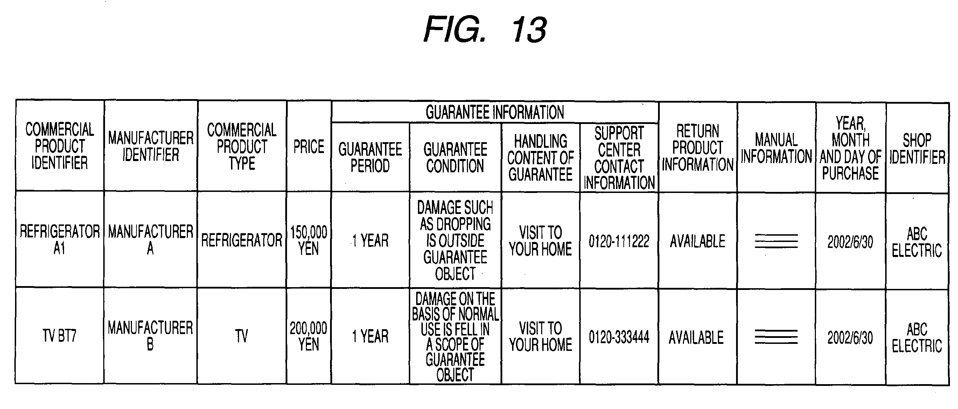

Next, the first information processing device 81 obtains auxiliary information which corresponds to the commercial product identifiers "refrigerator A1" and "television BT7", from the third information processing device 83. Next, the first information processing device 81 generates consumer's electronic receipt information on the basis of the electronic receipt information and auxiliary information of the "refrigerator A1" and "television BT7". An example of the consumer's electronic receipt information, which the first information processing device 81 configured, is shown in Fig.13. The consumer's electronic receipt information has "commercial product identifier" "manufacturer identifier" "commercial product type" "price" "guarantee information" "return product information" "manual information" "year, month and day of purchase" "purchase shop identifier". As to the "year, month and day of purchase" and "purchase shop identifier", the first information processing device 81 holds them in advance.

Next, the second information processing device 82 receives consumer's electronic receipt information of Fig.13 from the first information processing device 81, and stores it.

Next, to the purchased refrigerator "refrigerator A1" and television "television BT7", the second information processing device 82 transmits the stored consumer's electronic receipt information. Then, the refrigerator "refrigerator A1" and television "television BT7" store commercial product identifiers "refrigerator A1" and "television BT7" which identify themselves, respectively.

Next, the refrigerator "refrigerator A1" obtains only a record (consumer's electronic receipt information) which has the commercial product identifier "refrigerator A1", from the transmitted consumer's electronic receipt information of Fig.13, and stores it. In sum, this refrigerator is a refrigerator which receives a plurality of consumer's electronic receipt information, and records only information which relates to itself, among the plurality of consumer's electronic receipt information.

Next, the refrigerator "refrigerator A1" automatically outputs information etc. relating to a guarantee period or/and a guarantee content, on the basis of guarantee information of the "refrigerator A1" of Fig.13. Concretely speaking, it outputs the guarantee information, prior to a given length of days (prior to predetermined days) where the guarantee period is expired, from "year, month and day of purchase" "guarantee period" which correspond to the "refrigerator A1" of Fig.13. In the same manner, the television "television BT7" obtains only a record (consumer's electronic receipt information) which has the commercial product identifier "television BT7" from the transmitted consumer's electronic receipt information of Fig.13, and stores it. In sum, this television receives a plurality of consumer's electronic receipt information, and records only information relating to itself, among the plurality of consumer's electronic receipt information. Then, the television "television BT7" automatically output information etc. relating to a guarantee period or/and a guarantee content, on the basis of the guarantee information of Fig.13.

In addition, by the above-descried processing, guarantee information, which is information relating to guarantee of a commercial product, is to be stored in the refrigerator "refrigerator A1" and the television "television BT7". A user can output this guarantee information at any time. In addition, by the above-described processing, manual information of a commercial product is to be stored in the refrigerator "refrigerator A1" and the television "television BT7". A user can output this manual information at any time. Further, by the above-described processing, return product information is stored in the refrigerator "refrigerator A1" and the television "television BT7". On the occasion that a user wish to return products, it is possible to output the return product information at any time, to confirm availability of returning a product. Meanwhile, the refrigerator has a display or/and a speaker which outputs information.

As above, according to this embodiment, it is possible to effectively utilize electronic receipt information which is collected at a shop where a commercial product etc. are purchased, for example, in an in-home electronic equipment, through a portable terminal. In case of carrying out settlement by the portable terminal, convenience is especially high. In addition, it is possible to effectively utilize the guarantee information which is obtained on the occasion of purchasing a commercial product etc., the return product information which shows availability of returning a product, and the manual information.

Meanwhile, in this embodiment, the guarantee information, the return product information and the manual information are stored in the refrigerator and the television, but these information may be stored in another electronic equipment such as an air conditioner and a computer.

In addition, in this embodiment, a terminal identifier is not described in detail, but the terminal identifier is, for example, communication information for communicating with a portable terminal (second information processing device 82). The communication information is, for example, a telephone number, an IP address etc. The first information processing device 81 transmits consumer's electronic receipt information to the second information processing device 82, on the basis of the obtained terminal identifier.

In addition, in this embodiment, it described the example of the refrigerator and the television, which receives a plurality of consumer's electronic receipt information, and records only information relating to itself, among the plurality of consumer's electronic receipt information. However, it is not limited to the refrigerator and the television, but may be another electronic equipment. In this embodiment, it described the electronic equipment which receives a plurality of consumer's electronic receipt information, and records only information relating to itself, among the plurality of consumer's electronic receipt information. In addition, in this embodiment, it also described about the electronic equipment which has stored the guarantee information which is information relating to guarantee of a commercial product. In addition, in this embodiment, it also described about the electronic equipment which automatically outputs information relating to a guarantee period or/and a guarantee content, on the basis of guarantee information.

Furthermore, in this embodiment, the consumer's electronic receipt information does not include a terminal identifier, but may include the terminal identifier.

### (Third Embodiment)

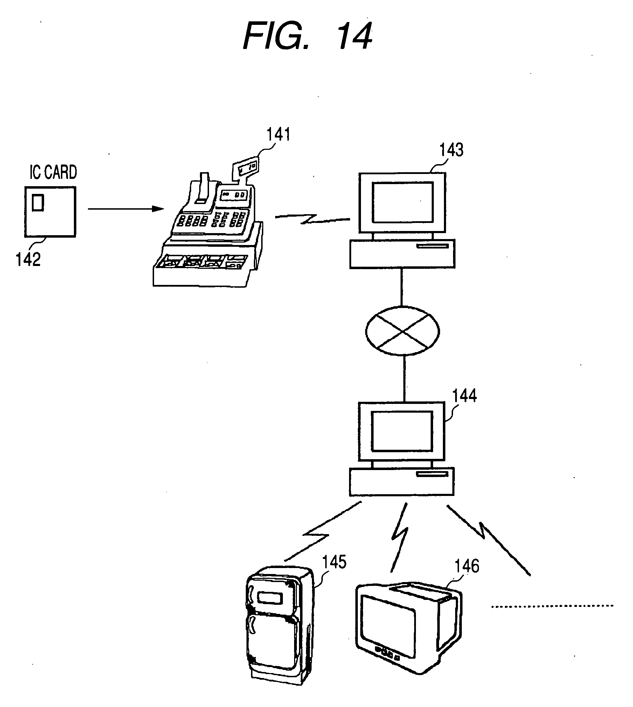

Fig.14 is a schematic diagram of an electronic receipt information processing system in the invention. The electronic receipt information processing system has a first information processing device 141, a recording medium 142, a server device 143, a home server 144, a refrigerator 145, a television 146 and so on. The first information processing device 141 is an information processing device which is disposed at a shop where a commercial product etc. are judged, and for example, a cash register which has a communication function. The recording medium 142 stores a terminal identifier which identifies a user (first information processing device 141). The recording medium 142 is an IC card, a semiconductor memory which is easily carried on, and so on. The server device 143 is an information processing device which manages consumer's electronic receipt information, and provides various services to a purchaser (user) of a commercial product. The home server 144 is an information processing device which is normally disposed in a home, and becomes a communication tool for a user's receiving various services from the server device 143. An electronic equipment such as the refrigerator 145 and the television 146 receives a service from the server device 143 through the home server 144.

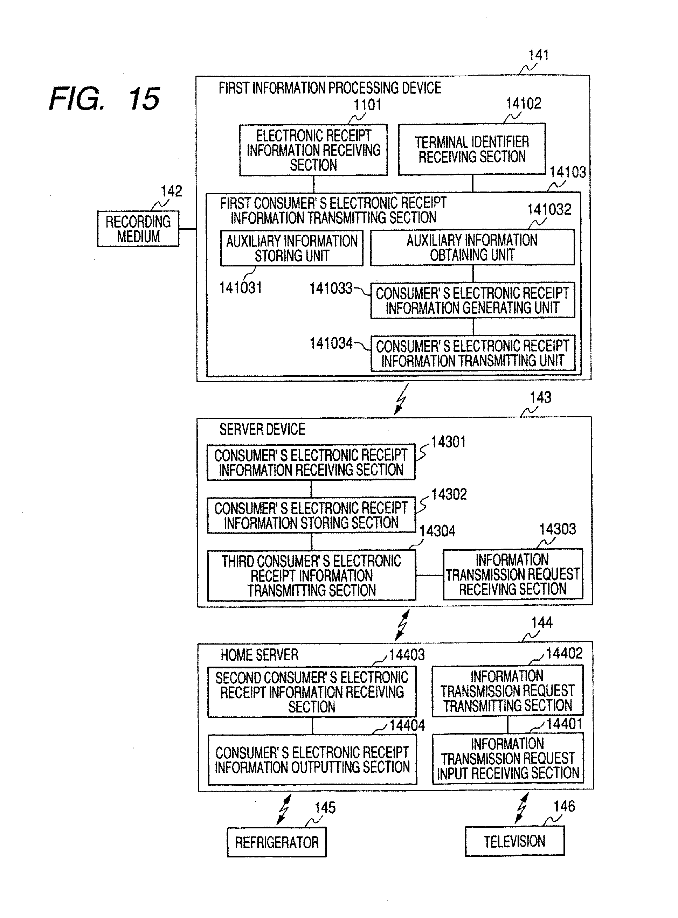

Fig. 15 is a block diagram of the electronic receipt information processing system in the invention. The first information processing device 141 has an electronic receipt receiving section 1101, a terminal identifier receiving section 14102, and a first consumer's electronic receipt information transmitting section 14103. The first consumer's electronic receipt information transmitting section 14103 has an auxiliary information storing unit 141031, an auxiliary information obtaining unit 141032, a consumer's electronic receipt information generating unit 141033, and a consumer's electronic receipt information transmitting unit 141034. The server device 143 has a consumer's electronic receipt information receiving section 14301, a consumer's electronic receipt information storing section 14302, an information transmission request receiving section 14303, and a third consumer" electronic receipt information transmitting section 14304. The home server 144 has an information transmission request receiving section 14401, an information transmission request transmitting section 14402, a second consumer's electronic receipt information receiving section 14403, and a consumer's electronic receipt information outputting section 14404.

The terminal identifier receiving section 14102 obtains a terminal identifier from the recording medium 142. The terminal identifier receiving section 14102 is, for example, an IC card reader. As the terminal identifier receiving section 14102, any means, which can read out information from the recording medium 142, can be utilized.

The auxiliary information storing unit 141031 stores auxiliary information. As the auxiliary information storing unit 141031, a non-volatile recording medium is preferable, but a volatile recording medium may be utilized.

The auxiliary information obtaining unit 141032 obtains auxiliary information from the auxiliary information storing unit 141031. Normally, the auxiliary information obtaining unit 141032 obtains auxiliary information on the basis of electronic receipt information which the electronic receipt information receiving section 1101 received. A concrete obtaining method of the auxiliary information will be hereinafter described concretely. The auxiliary information obtaining unit 141032 is normally realized by software, but may be realized by hardware (electronic circuit).

The consumer's electronic receipt information generating unit 141033 generates consumer's electronic receipt information on the basis of one or more information among a terminal identifier, electronic receipt information, and auxiliary information. A concrete configuring method of consumer's electronic receipt information will be hereinafter described. The consumer's electronic receipt information generating unit 141033 is normally realized by software, but may be realized by hardware (electronic circuit).

The consumer's electronic receipt information transmitting unit 141034 transmits consumer's electronic receipt information generated by the consumer's electronic receipt information generating unit 141033. As the consumer's electronic receipt information transmitting unit 141034, wireless or wired communication units is preferable, but it may be realized by a broadcasting unit.

The consumer's electronic receipt information receiving section 14301 receives consumer's electronic receipt information from the first information processing device 141. As the consumer's electronic receipt information receiving section 14301, wireless or wired communication units is preferable, but it may be realized by a broadcasting unit. Meanwhile, the consumer's electronic receipt information receiving section 14301 normally receives the consumer's electronic receipt information, from a plurality of the first information processing devices.

The consumer's electronic receipt information storing section 14302 stores the consumer's electronic receipt information received by the consumer's electronic receipt information receiving section 14301, in a recording medium which is not shown in the figure. As this recording medium, a non-volatile recording medium is preferable, but may be a volatile recording medium.

The information transmission request receiving section 14303 receives an information transmission request from the home server 144. As the information transmission request receiving section 14303, normally, wireless or wired communication units are preferable, but it may be realized by a broadcasting unit.

The third consumer's electronic receipt information transmitting section 14303 transmits, in case that the information transmission request receiving section 14303 receives an information transmission request, a part or all of consumer's electronic receipt information which corresponds to the request, to the home server 144. As the third consumer's electronic receipt information transmitting section 14304, wireless or wired communication units are preferable, but it may be realized by broadcasting unit.

The information transmission request input receiving section 14401 receives an input of an information transmission request which is such a request that a part or all of consumer's electronic receipt information is transmitted. Acceptance of this input may be acceptance of an input from a keyboard, may be acceptance of an input by a mouse, and may be reception etc. of an order from an external device.

The information transmission request transmitting section 14402 transmits the information transmission request that the information transmission request input receiving section 14401 accepted, to the server device 143.

The second consumer's electronic receipt information receiving section 14403 receives consumer's electronic receipt information from the server device 143. As the second consumer's electronic receipt information receiving section 14403, wireless or wired communication units are preferable, but it may be realized by a broadcasting unit.

The consumer's electronic receipt information outputting section 14404 outputs the consumer's electronic receipt information received by the second consumer's electronic receipt information receiving section 14403. Here, the output also include transmission to another electronic equipment (refrigerator, television etc.), in addition to display on a display, audio output to a speaker, and printing on a printer.

Next, an operation of the first information processing device 141, which generates the electronic receipt information processing system, will be described with reference to a flow chart of Fig .16.

(Step S1601) The terminal identifier receiving section 14102 judges whether or not a terminal identifier is received . If the terminal identifier is received, it goes to a step S1602, and if the terminal identifier is not received, it goes back to the step S1601. Acceptance of the terminal identifier is, for example, carried out as follows. The terminal identifier is recorded in an IC card. Then, the terminal identifier receiving section 1102 is configured by an IC card reader, and it receives the terminal identifier by inserting the IC card into the IC card reader.

(Step S1602) The electronic receipt information receiving section 1101 judges whether or not electronic receipt information is received. If the electronic receipt information is received, it goes to a step S1603, and if the electronic receipt information is not received, it goes to a step S1605.

(Step S1603) The auxiliary information obtaining unit 141032 obtains auxiliary information from the auxiliary information storing unit 141031, on the basis of partial or all information of the electronic receipt information.

(Step S1604) The electronic receipt information receiving section 1101 stores the electronic receipt information which is received in the step S1602, and the auxiliary information obtaining unit 14103 stores the auxiliary information which is obtained in the step S1603.

(Step S1605) The electronic receipt information receiving section 1101 judges whether a completion signal is received or not. If the completion signal is received, it goes to a step S1606, and if the completion signal is not received, it goes back to the step S1602.

(Step S1606) The first consumer's electronic receipt information transmitting section 1103 generates consumer's electronic receipt information on the basis of a part or all of the electronic receipt information which is received by the electronic receipt information receiving section 1101, the auxiliary information obtained by the auxiliary information obtaining unit 141032, and the terminal identifier which is received in the step S1601.

(Step S1606) The first consumer's electronic receipt information transmitting section 1103 transmits the consumer's electronic receipt information which is configured in the step S1606, to the server device 143.

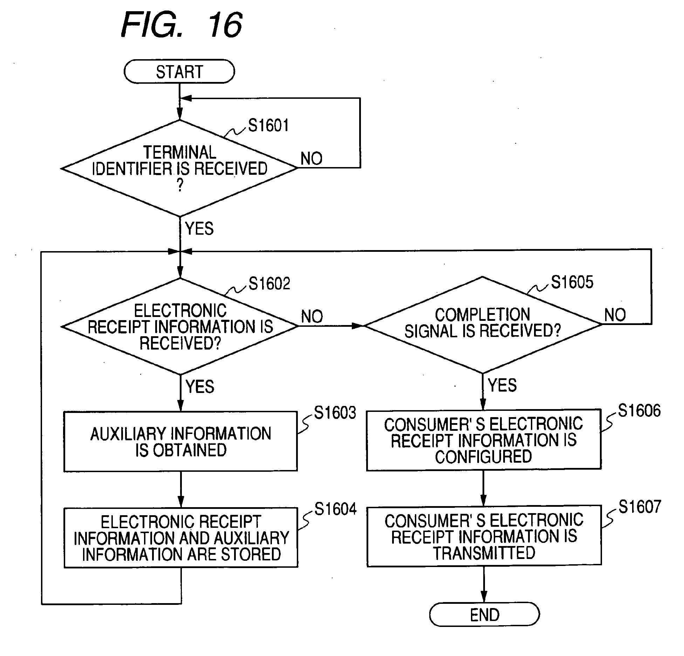

Meanwhile, in a flow chart of Fig.16, any order of reception of the terminal identifier and acceptance of the electronic receipt information can be utilized.

Next, an operation of the server device 143, which generates the electronic receipt information processing system, will be described. Firstly, the server device 143 receives and stores the consumer's electronic receipt information from the first information processing device 141. Then, the server device 143 stores and manages the consumer7s electronic receipt information with respect to each terminal identifier (purchaser identifier). Next, such an operation that the server device 143 receives an information transmission request and transmits consumer's electronic receipt information, will be described. The server device 143 stores information (e.g., commercial product identifier) which the information transmission request has, as a key, and searches the consumer's electronic receipt information, and transmits it to the home server 144. Meanwhile, the server device 143 applies statistical processing to the consumer's electronic receipt information with respect to each terminal identifier (purchaser identifier), and transmits information of a household account book to the home server 144. What is described above is the operation of the server device 143 which received the information transmission request from the home server 144.

Next, such an operation that the server device 143 processes the consumer's electronic receipt information with respect to each terminal identifier (purchaser identifier), and automatically transmits a result of the processing to the home server 144, will be described. First automatic processing is processing for transmitting household account information from the server device 143 to the home server 144 on regular basis. For example, the server device 143 calculates a sate of consumption (an absolute amount with respect to each item, such as a food expense OO Yen and daily commodity OO Yen, and a consumption rate with respect to each item), on the basis of consumer's electronic receipt information with respect to each terminal identifier (purchaser identifier) which occurred from 26th day, last month up to 25th day, this month, and transmits it to the home server 144.

Second automatic processing is automatic delivery of guarantee information prior to guarantee period completion. The server device 143 judges that completion of a guarantee period is near at hand, on the basis of a guarantee period and year, month and day of purchase which is included in the consumer's electronic receipt information, and transmits information for informing that completion of the guarantee period is near at hand, to the home server 144. Prior to guarantee period completion is, for example, one month prior to completion of a guarantee period. If the information is informed to a user that guarantee period completion is near at hand, one month prior to completion of a guarantee period, a user can easily take a next action, which is advantageous to a user.

In third automatic processing, the server device 143 carries out remote automatic diagnosis of an electronic equipment such as the refrigerator 145 and the television 146, and in case that it judged that there is a trouble, transmits manual information which the consumer's electronic receipt information has, to the home server 144 or each electronic equipment (refrigerator 145 and television 146 etc.). Meanwhile, the server device 143 selects manual information regarding the trouble, and transmits it to the home server or each electronic equipment (refrigerator 145 and television 146 etc.).

In fourth processing, electronic receipt information is aggregated with respect to each individual, or/and with respect to each item (subject) of commercial products etc., or/and with respect to each date, and its aggregation result is notified to a user (consumer). Or, the above-described aggregation result is registered (uploaded) on a specific Web page. By the above-described processing, a user can automatically understand a consumption trend, and can put it to use for saving etc. In addition, a business for providing such a service is also possible.

In fifth automatic processing, it is all right even if the server device 143 obtains (or generates) information such as advice for commercial product purchase, advice for health care and advice for beautification, on the basis of electronic receipt information of each individual, and transmits the information to the home server 144. Concretely speaking, it is all right even if, on the basis of information showing items of food products and information showing an amount which the electronic receipt information has, obtained (generated) are, for example, such commercial product purchase advise that more vegetables are purchased and ingested in case that ingestion of meats is large as compared with ingestion of vegetables, and such information that if ingestion of meats continues without any change, it is not good to health and beautification, and the information is transmitted to the home server 144. In such a case, the server device 143 obtains and aggregates the information showing items and the information showing an amount which the electronic receipt information has. Then, the server device 143 holds information of a percentage of appropriate amounts of meats and vegetables, and on the basis of the information which is held, and the aggregated information, generates and transmits advice etc. In order to configure advice, the server device 143 holds one or more advice information in advance.

As above, according to this embodiment, the electronic receipt information, which is collected at a shop where a commercial product etc. are purchased, is firstly utilized by the server device, and in addition, it can be effectively utilized in an in-home electronic equipment through the server device. A business entity, which has the server device, becomes a so-called application service provider, and can provide various services on the basis of the electronic receipt information.

Meanwhile, in this embodiment, information is transmitted to the home server, but may be transmitted directly to an electronic equipment such as a refrigerator and a television. Then, it is all right even if the electronic equipment such as the refrigerator and the television stores the guarantee information which is transmitted from the server device, the return product information which shows availability of returning a product and the manual information.

In addition, significance of the home server in this embodiment is on guarantee of security. It is possible to configure in such a manner that access is available from an external device only up to the home server, and is not available to an in-home electronic equipment. It is formulation of a so-called fire wall.

### <Industrial Applicability>

As above, an electronic receipt information processing system etc. which relate to the invention can effectively utilize electronic receipt information which is collected at a shop where a commercial product etc. are purchased, and is useful as an electronic receipt information processing system etc. which can be utilized at a shop such as a large size super market.

## Claims

1. An electronic receipt information processing system, comprising:
a first information processing device, including
an electronic receipt information receiving section, which receives electronic receipt information having one or more information relating to purchase settlement of a commercial product or a service;
an auxiliary information obtaining unit which obtains auxiliary information on the basis of a part or all of the information of the electronic receipt information;
a consumer's electronic receipt information generating unit, which generates consumer's electronic receipt information from the part or all of the electronic receipt information and the auxiliary information; and
a consumer's electronic receipt information transmitting unit, which transmits the consumer's electronic receipt information generated by the consumer's electronic receipt information generating unit; and
a second information processing device, including:
a consumer's electronic receipt information receiving section which receives the consumer's electronic receipt information; and
a second consumer's electronic receipt information transmitting section which transmits a part or all of the consumer's electronic receipt information received by the consumer's electronic receipt information receiving section.

2. The electronic receipt information processing system as set forth in claim 1, wherein the consumer's electronic receipt information has a commercial product identifier which identifies a commercial product, and return product information which shows whether a commercial product, which is identified by the commercial product identifier, is possible to be returned or impossible to be returned.

3. The electronic receipt information processing system as set forth in claim 1, wherein the consumer's electronic receipt information has a commercial product identifier which identifies a commercial product, and guarantee information relating to guarantee of a commercial product which is identified by the commercial product identifier.

4. A first information processing device, which configures the electronic receipt information processing system according to any one of claims 1 through 3.

5. A second information processing device, which configures the electronic receipt information processing system according to any one of claims 1 through 3.

6. An electronic apparatus, which stores guarantee information relating to guarantee of the electronic equipment.

7. The electronic apparatus as set forth in claim 6, which automatically output information relating to a guarantee period or/and a guarantee content on the basis of the guarantee information.

8. An electronic apparatus, which receives a plurality of consumer's electronic receipt information, and records only information relating to the electronic apparatus among the plurality of consumer's electronic receipt information.

9. A method for transmitting and receiving electronic receipt information in an electronic receipt information processing system having a first information processing device and a second information processing device, the method comprising:
an electronic receipt information receiving step for receiving electronic receipt information having one or more information relating to purchase settlement of a commercial product or a service in the first information processing device;
a first consumer's electronic receipt information transmitting step for obtaining auxiliary information on the basis of a part or all of the information of the electronic receipt information, and for generating consumer's electronic receipt information from the part or all of the electronic receipt information and the auxiliary information, and for transmitting the generated consumer's electronic receipt information in the first information processing device;
a consumer's electronic receipt information receiving step for receiving the consumer's electronic receipt information in the second information processing device; and
a second consumer's electronic receipt information transmitting step for transmitting a part or all of the consumer's electronic receipt information which is received in the consumer's electronic receipt information receiving step in the second information processing device.
